(19) **Europäisches Patentamt / European Patent Office / Office européen des brevets**

(11) **EP 2 235 933 B1**

(12) **FASCICULE DE BREVET EUROPEEN**

(45) Date de publication et mention
de la délivrance du brevet:
**24.05.2017 Bulletin 2017/21**

(21) Numéro de dépôt: **08841055.0**

(22) Date de dépôt: **27.10.2008**

(51) Int Cl.:
*H04N 5/335* (2011.01)          *H04N 5/32* (2006.01)

(86) Numéro de dépôt international:
**PCT/EP2008/064552**

(87) Numéro de publication internationale:
**WO 2009/053494 (30.04.2009 Gazette 2009/18)**

(54) **PROCÉDÉ DE TRAITEMENT D'IMAGES ISSUES D'UN DÉTECTEUR PHOTOSENSIBLE ET DÉTECTEUR PHOTOSENSIBLE**

VERFAHREN ZUM VERARBEITEN VON AUS EINEM LICHTEMPFINDLICHEN DETEKTOR ENTSTEHENDEN BILDERN UND LICHTEMPFINDLICHER DETEKTOR

METHOD OF PROCESSING IMAGES ARISING FROM A PHOTOSENSITIVE DETECTOR AND PHOTOSENSITIVE DETECTOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.10.2007 FR 0707563**

(43) Date de publication de la demande:
**06.10.2010 Bulletin 2010/40**

(73) Titulaire: **Trixell S.A.S.**
**38430 Moirans (FR)**

(72) Inventeurs:
• **VIGNOLLE, Jean Michel**
 **F-38430 St Jean De Moirans (FR)**
• **WIRTH, Thibaut**
 **F-38500 Coublevie (FR)**

(74) Mandataire: **Collet, Alain et al**
 **Marks & Clerk France**
 **Conseils en Propriété Industrielle**
 **Immeuble Visium**
 **22, Avenue Aristide Briand**
 **94117 Arcueil Cedex (FR)**

(56) Documents cités:
**US-A1- 2005 029 453**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un procédé de traitement d'images issues d'un détecteur photosensible du type notamment réalisé par des techniques de dépôt de matériaux semi-conducteurs. L'invention concerne également un détecteur photosensible mettant en oeuvre le procédé un procédé selon l'invention. L'invention concerne plus particulièrement (mais non exclusivement) le traitement d'images radiologiques. Le détecteur est par exemple réalisé sous forme d'une matrice de points photosensibles. Il peut également être réalisé sous forme d'une barrette de points photosensibles et même sous forme d'un détecteur analogique.

Les techniques de dépôts en films minces de matériaux semi-conducteurs tels que le silicium amorphe hydrogéné (aSiH), sur des supports isolants en verre par exemple, permettent de réaliser des matrices de points photosensibles pouvant produire une image à partir d'un rayonnement visible ou proche du visible. Pour utiliser ces matrices à la détection d'images radiologique, il suffit d'interposer entre le rayonnement X et la matrice, un écran scintillateur pour convertir le rayonnement X en rayonnement lumineux dans la bande de longueurs d'onde auxquelles les points photosensibles sont sensibles.

Un premier défaut affecte la qualité d'images acquises par le détecteur photosensible. Les composants semi-conducteurs utilisés dans de tels détecteurs ne sont pas tous identiques et le détecteur photosensible possède de manière inhérente des inhomogénéités qui se traduisent par des zones altérées.

Pour essayer d'obtenir une image utile de qualité optimale, on effectue une première correction de l'image acquise par le détecteur à partir d'une image dite d'offset connue sous la dénomination française d'image de noir généralement prise et stockée en début d'un cycle de fonctionnement. Cette image d'offset est l'image obtenue alors que le détecteur photosensible est exposé à un signal d'intensité nulle et correspond à une sorte d'image de fond. L'image d'offset varie en fonction de l'état électrique des composants des points photosensibles et de la dispersion de leurs caractéristiques électriques. L'image utile est celle lue alors que le détecteur photosensible a été exposé à un signal utile qui correspond à une exposition à un rayonnement X. Elle englobe l'image d'offset. La correction consiste à effectuer une soustraction entre l'image utile et l'image d'offset.

Une deuxième correction appliquée à l'image est une correction de gain. Cette correction est généralement multiplicative et peut dépendre de chaque point photosensible. On parle alors d'image de gain. Il s'agit d'une matrice de même taille que la matrice photosensible. La matrice, dite de gain, comprend, associé à chaque point photosensible, un coefficient correctif à appliquer au niveau mesuré par le point photosensible correspondant pour obtenir une image dite utile. Ce type de correction est par exemple décrite dans le document US 2005/0029453 A1.

L'image de gain ne peut être définie durant l'utilisation normale du détecteur photosensible. L'image de gain est définie lors d'une phase de calibration qui peut durer plusieurs minutes pendant lesquelles le détecteur photosensible est indisponible.

On s'est rendu compte que l'image de gain varie en fonction de la température du détecteur. Parfois, des non-uniformités visibles apparaissent dans l'image et rendent l'image inexploitable notamment dans le domaine de la radiologie médicale. Dès que la température varie, typiquement de plus ou moins trois degrés, on peut parfois avoir à refaire la phase de calibration. Pour pallier ce problème, on a réalisé des détecteurs photosensibles stabilisés en température. Pour atteindre cette stabilité, le détecteur ne peut être utilisé qu'après un temps d'attente de plusieurs heures suite à une mise sous tension du détecteur. Il peut arriver que la température du détecteur s'écarte de plus de trois degrés de sa température moyenne. Dans ce cas, la qualité d'image peut éventuellement se dégrader et il faut prévoir une nouvelle phase de calibration du détecteur et donc son immobilisation. Pour améliorer la stabilité thermique du détecteur, on a mis en oeuvre une circulation de fluide de refroidissement dans le détecteur. Cette solution est coûteuse et délicate à mettre oeuvre.

Les solutions de stabilisation en température de détecteurs peuvent être adaptées à une utilisation fixe par exemple dans un local spécialement dédié à la radiologie.

L'invention a pour but de permettre le fonctionnement de détecteurs photosensibles dans un environnement où la température est susceptible d'évoluer, par exemple dans une utilisation portable d'un détecteur.

A cet effet, l'invention a pour objet un procédé de traitement d'images issues d'un détecteur photosensible, le procédé consistant à traiter une image acquise par le détecteur, l'image étant corrigée par une image de gain, caractérisé en qu'on applique à l'image acquise une image de correction de dérive de gain en température en fonction d'une température mesurée par le détecteur lors de l'acquisition de l'image.

L'invention a également pour objet un détecteur photosensible destiné à être installé dans un système comprenant un générateur de rayonnement auquel le détecteur est sensible, le détecteur mettant en oeuvre le procédé de l'invention, l'image de gain étant propre au système, caractérisé en ce que le détecteur comporte des moyens pour appliquer à l'image acquise une image de correction de dérive de gain en température en fonction d'une température mesurée par le détecteur.

Un avantage de l'invention est d'éviter toute phase de calibration pour déterminer une nouvelle image de gain même si la température du détecteur évolue.

L'invention a également pour avantage d'éviter le stockage de plusieurs images de gain à des températures différentes.

L'invention sera mieux comprise et d'autres avantages apparaîtront à la lecture de la description détaillée de plusieurs modes de réalisation de l'invention donnés à titre d'exemple, modes de réalisation illustrés par le dessin joint dans lequel :

- la figure 1 représente un premier mode de réalisation d'un procédé conforme à l'invention ;
- la figure 2 représente un second mode de réalisation d'un procédé conforme à l'invention ;
- les figure 3, 4 et 5 représentent un exemple d'élaboration d'images de correction de dérive de gain utilisées pour le second mode de réalisation.

Par souci de clarté, les mêmes éléments porteront les mêmes repères dans les différentes figures.

L'invention s'applique à une image acquise par un détecteur photosensible par exemple organisé en matrice. Une première correction consiste à appliquer à l'image acquise une correction fonction d'une image d'offset comme décrit précédemment. Cette première correction est par exemple soustractive. Plus précisément, l'image d'offset est une image réalisée par le détecteur lui-même alors qu'il n'est soumis à aucun rayonnement utile. Par exemple en imagerie médicale mettant en oeuvre des rayonnements X, l'image d'offset est obtenue en l'absence de rayonnement X. L'image d'offset est matricielle et le niveau de signal relevé pour chaque point de la matrice de l'image d'offset est soustrait du niveau du point correspondant dans l'image acquise.

Une seconde correction consiste à appliquer à l'image acquise corrigée d'offset une correction de gain. Comme précédemment, on définit une matrice de correction comprenant autant de point que la matrice du détecteur. Cette matrice de correction de gain comprend un coefficient de correction à appliquer à chaque point de l'image acquise. On appelle cette matrice de correction : image de gain. La correction de gain est par exemple multiplicative. Autrement dit, on multiplie le niveau de chaque point de l'image acquise par le coefficient correcteur correspondant.

L'image de gain est fonction de l'utilisation du détecteur photosensible. Par exemple en imagerie médicale X, le détecteur photosensible est un composant d'un système comprenant un générateur de rayonnement X. L'image de gain est déterminée pour le système complet et pas seulement en fonction du détecteur seul. L'image de gain ne peut pas être définie lors de la construction du détecteur.

Par contre, l'image de gain varie essentiellement en fonction de la température du détecteur. L'invention consiste donc à appliquer, à l'image acquise, une image de correction de dérive de gain en température en fonction d'une température mesurée par le détecteur. Comme précédemment, on entend par image de correction de dérive de gain, une matrice de même taille que celle du détecteur photosensible et contenant un coefficient de correction associé à chaque point photosensible. L'image de correction de dérive de gain en température peut être propre au détecteur photosensible indépendamment du système auquel le détecteur appartient.

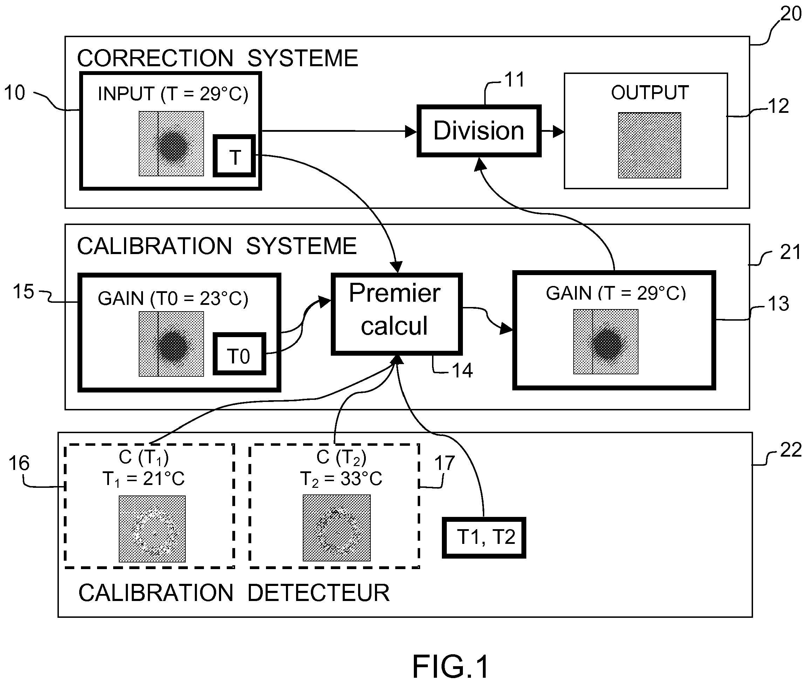

La figure 1 représente de façon schématique un premier mode de réalisation d'un procédé selon l'invention. Le repère 10 représente une image acquise corrigée d'offset notée INPUT(T), T représentant une température mesurée par le détecteur photosensible. Pour illustrer ce mode de réalisation, on a choisi une température T de 29°C. Une correction de gain, dans le cas présent une division 11, est appliquée à l'image acquise corrigée d'offset INPUT(T) pour obtenir une image de sortie 12 exempte d'artéfact de gain et notée OUTPUT. La correction de gain est réalisée au moyen d'une image de gain 13 à la température T, c'est à dire 29°C et notée Gain(T). L'image de gain est obtenue par un premier calcul 14 prenant en compte une image de gain 15 à une température T0, ici 23°C et notée Gain (T0) ainsi que deux images de correction de dérive de gain 16 et 17 respectivement à deux températures distinctes T1=21 °C et T2=33°C et respectivement notée C(T1) et C(T2). La correction de gain est représentée dans un cadre 20 regroupant l'image acquise corrigée d'offset 10, la division 11 et l'image de sortie 12. La calibration du système est représentée dans un cadre 21 regroupant l'image de gain, Gain (T0), 15, le premier calcul 14 et l'image de gain, Gain (T), 13. L'ensemble des opérations réalisées aux cadres 20 et 21 est réalisé par le système. La calibration du détecteur est représentée au cadre 22 et comprend les deux images de correction de dérive de gain : C(T1) 16 et C(T2) 17 ainsi que les valeurs des deux températures T1 et T2.

Le premier calcul 14 peut être effectué de la façon suivante :

$$a = (T-T1)/(T2-T1) \qquad (1)$$

$$a0 = (T0-T1)/(T2-T1) \qquad (2)$$

$$b = (1-a).C(T1) + a.C(T2) \qquad (3)$$

$$b0 = (1-a0).C(T1) + a0.C(T2) \qquad (4)$$

$$Gain(T) = Gain(T0) . b/b0 \qquad (5)$$

Dans les cinq équations précédentes, les paramètres a, a0, b et b0 permettent simplement de simplifier l'écriture du premier calcul 14.

La division 11 ainsi que le premier calcul 14 sont réalisés au niveau du système lui-même et non pas au niveau du détecteur photosensible. L'utilisateur du système doit disposer des informations de calibration du détecteur représentées au cadre 22. Ces informations peuvent être fournies par le fabricant du détecteur sur un support externe, ou avantageusement seront inscrites dans une mémoire du détecteur et l'utilisateur du système pourra les relire en interrogeant le détecteur.

Dans l'exemple proposé plus haut, la correction de gain et la correction de dérive de gain en température sont multiplicatives. La propriété commutative de ces deux multiplications permet de corriger la dérive en température avant la correction de gain.

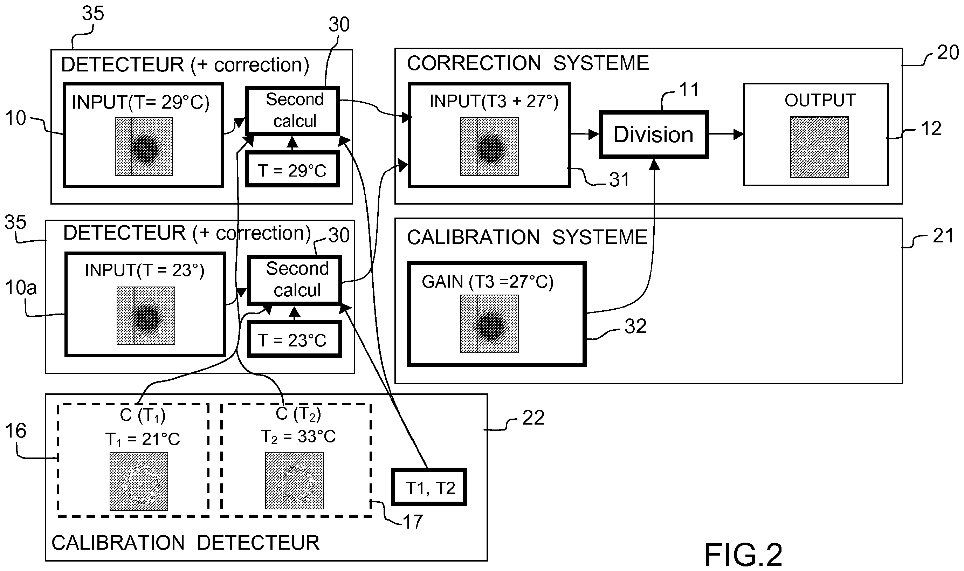

La figure 2 représente un deuxième mode de réalisation du procédé de traitement d'image selon l'invention, mode dans lequel le premier calcul 14 est découpé de façon différente de façon à pourvoir effectuer la correction de dérive de gain en température au sein même du détecteur. Le détecteur produit alors des images corrigées d'offset et de dérive de gain en température en les ramenant à une température virtuelle T3. On choisit par exemple T3 = (T1+T2)/2. L'utilisateur du système n'a plus à tenir compte de la température T du détecteur.

Bien que l'image de gain soit propre au système et non au détecteur seul, il est possible de modéliser à l'intérieur du détecteur, indépendamment du reste du système, notamment d'un générateur de rayonnement X, la dérive en température de l'image de gain. Cette modélisation de la dérive en température peut être modélisée par le fabricant du détecteur avant même que le détecteur soit intégré dans un système. Cette opération de modélisation consiste à déterminer une dérive en température d'une image de gain sans connaître cette image de gain.

L'image acquise 10 INPUT(T) pour une température T de 29°C subit une correction de dérive de gain en température au moyen d'un second calcul 30 pour obtenir une image 31 équivalente à l'image acquise 20 mais dont la dérive en température est corrigée. Cette image est ramenée à la température virtuelle T3. L'image 31 est notée INPUT(T3). Une autre image acquise corrigée d'offset 10a subit également la correction du second calcul 30 pour obtenir également une image 31 toujours ramenée à la température virtuelle T3. Ensuite le système applique la correction de gain au moyen de la division 11 par une image de gain 32 notée Gain(T3) pour obtenir l'image de sortie OUTPUT 12. L'image de gain 32 est semblable aux images de gain 13 et 15. Chaque image de gain est relative à une température. L'image de gain 32 est relative à la température T3. Comme pour le premier calcul 14, le second calcul 30 prend en compte les deux images de correction de dérive de gain C(T1) 16 et C(T2) 17 respectivement aux deux températures T1=21 °C et T2=33 °C.

Sur la figure 2, on retrouve les cadres 20, 21 et 22 déjà décrits au moyen de la figure 1. De plus, sur la figure 2 apparaît un cadre 35 dans lequel le second calcul 30 corrige la dérive de gain en température pour obtenir l'image 31 délivrée au système. Les opérations du cadre 35 peuvent être mises en oeuvre dans le détecteur lui-même sans utiliser de données provenant du reste du système.

Le second calcul 30 peut se faire de la façon suivante en reprenant les équations (1) et (3) déjà mises en oeuvre dans le premier calcul 14.

$$a = (T-T1)/(T2-T1) \qquad (1)$$

$$b = (1-a).C(T1) + a.C(T2) \qquad (3)$$

$$INPUT(T3) = INPUT(T) \, . \, b \qquad (6)$$

L'équation (6) est déduite du fait que T3 = (T1+T2)/2 donc en remplaçant T0 par T3 dans l'équation (2), on obtient a3 = ½ et du fait que C(T1) + C(T2) = 2 donc dans l'équation (4), on obtient b3 = 1. C(T1) + C(T2) = 2 est dû au fait que ces deux images sont normalisées autour d'une moyenne comme expliqué plus loin.

Des essais ont montré que la correction de dérive de gain augmente le bruit dans l'image ainsi corrigée et que la correction n'est nécessaire que sur certaines parties de l'image, plus précisément, les parties dont les variations de gain en fonction de la température entre points voisins dépassent un seuil donné. Sur ces parties uniquement, on applique à l'image acquise une image de correction de dérive de gain en température. Sur les autres parties, soit aucune correction de dérive de gain n'est appliquée, soit on applique une correction qui ne rajoute pas de bruit, par exemple une correction des basses fréquences uniquement. Sur ces parties il n'y a donc pas d'augmentation de bruit dans l'image acquise. A la suite de cette correction partielle de l'image acquise 10, on applique bien entendu la correction de gain à l'image complète.

Pour réaliser cette correction partielle, on peut par exemple mesurer deux images de gain G(T1) et G(T2) à deux températures différentes, en l'occurrence T1, et T2. Ces deux images de gain peuvent être mesurées pour un système typique utilisé lors de la fabrication du détecteur. On s'est rendu compte que les images de correction de dérive de gain en température C(T1) et C(T2), définies pour le système typique, peuvent également être utilisées même pour d'autres systèmes, par exemple lorsqu'on change de générateur de rayonnement auquel le détecteur est soumis et les images de gain sont différentes. Comme dans le premier mode de réalisation illustré à l'aide de la figure 1, il est possible de déterminer les images de correction C(T1) et C(T2) sans connaître l'image de gain du système complet. Grâce à l'invention, pour tout nouveau système, il est possible de ne faire une calibration pour définir une image de gain que pour une seule température, les images de correction C(T1) et C(T2) restant valables.

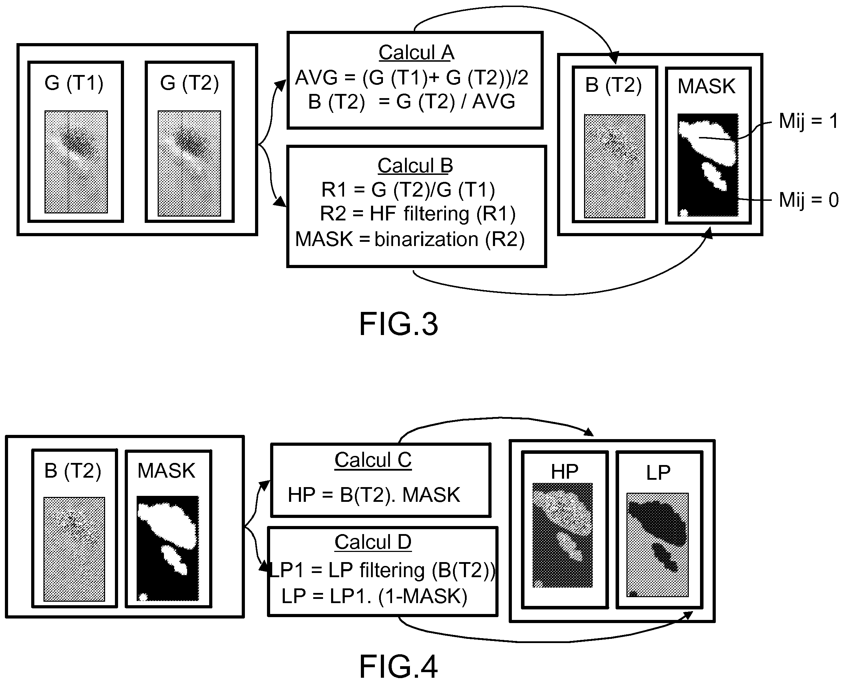

Un exemple d'élaboration des images de correction C(T1) et C(T2) est illustré au moyen des figures 3, 4 et 5.

A la figure 3, au calcul A on définit une moyenne AVG entre les deux images de gain :

$$AVG = (G(T1) + G(T2))/2 \qquad (7)$$

puis un correctif normalisé B(T2) par exemple pour la température T2 :

$$B(T2) = G(T2)/ \, AVG \qquad (8)$$

La sélection des zones à corriger est illustrée à la figure 3 au moyen du calcul B. On définit un écart R1 entre les deux images de gain G(T1) et G(T2) :

$$R1 = G(T2) \, / \, G(T1) \qquad (9)$$

On filtre ensuite l'écart R1 par rapport à un seuil donné pour définir un masque MASK sous forme de matrice. Un exemple de détermination de l'écart R1 et du masque MASK est donné au calcul B. L'opération de filtrage est notée « HF filtering » pour ne retenir que les zones hautes fréquences de l'écart R1 :

$$R2 = HF \text{ filtering } (R1) \qquad (10)$$

Le résultat du filtrage, sous forme de matrice notée R2. On peut par exemple définir l'opération de filtrage haute fréquence comme la différence entre l'écart R1 et une moyenne glissante de l'écart R1 sur un kernel de taille donnée par exemple 7x7.

On obtient le masque MASK par une opération notée :

$$MASK = \text{binarisation } (R2) \qquad (11)$$

Le calcul du masque MASK selon l'équation (11) est par exemple réalisé en calculant un écart type $\sigma$ de la matrice R2 puis pour chaque point R2ij de la matrice R2, on définit un point Mij correspondant du masque MASK de la façon suivante :

- Mij = 1 si valeur absolue de R2ij est supérieure à 3x$\sigma$
- et Mij = 0 dans le cas contraire.

On peut appliquer à la matrice ainsi obtenue une opération de dilatation par un kernel centré de taille 7x7. On entend par dilatation une opération de morphologie mathématique appelée dilatation en niveau de gris. La dilatation peut également être définie comme appartenant à la famille des convolutions qui permettent de remplacer chaque pixel par une combinaison linéaire des pixels voisins. Le voisinage d'un pixel est défini par une matrice ou noyau de convolution. Ce noyau est également appelé : kernel. Dans le cas d'un kernel de taille 7x7 sur la matrice binaire du masque, la dilatation consiste à mettre à 1 tout point se trouvant à une distance de trois pixels ou moins d'un pixel de valeur 1. La distance de trois pixels peut être interprétée au sens d'un déplacement de case d'un roi dans la règle habituelle d'un jeu d'échec. On note M1 la valeur des points avant dilatation et M2 la valeur des points après dilatation. Le fait d'utiliser une dilatation permet d'obtenir un masque qui couvre complètement les zones à corriger. Sans cette opération il y aurait des « trous » dans les zones à corriger. L'opération de dilatation permet également d'élargir légèrement les zones à corriger pour être certain de bien les couvrir entièrement et d'éviter les contours de zones trop tourmentés.

Dans l'exemple représenté sur la figure 3, la valeur 1 pour les points Mij est représentée en blanc et la valeur 0 est représentée en noir.

Avantageusement, pour lisser les effets de bord à la frontière entre les zones où Mij = 1 et Mij = 0, on peut donner des valeurs fractionnaires comprises entre 0 et 1 aux points Mij situés sur cette frontière. On note M3 la valeur des points après dilatation. Par exemple, on peut obtenir les valeurs de M3 en établissant une moyenne glissante de M2 par un kernel de taille 5x5.

La figure 4 illustre la distinction entre la correction normalisée applicable aux zones hautes fréquences et basses fréquences. La correction de dérive de gain en température peut n'être appliquée que dans les zones hautes fréquences de l'écart R1. Cette correction est illustrée au calcul C où une correction, notée HP, correspondant à la correction normalisée B(T2) uniquement appliquée aux pixels où les valeurs du masque MASK ne sont pas nulles. Pour les points dont les valeurs des points du masque MASK sont nulles la correction B(T2) n'est pas appliquée. Le calcul c est exprimé par :

$$HP = B(T2) \, . \, MASK \qquad (12)$$

On peut, en complément, appliquer aux points dont les valeurs du masque MASK sont nulles une correction n'entraînant pas de bruit dans l'image finale. Cette correction non bruitée est illustrée au calcul D en ne retenant que les valeurs basses fréquences, notées LP1, de la correction normalisée B(T2). Ces valeurs sont données par :

$$LP1 = LP \text{ filtering } (B(T2)) \qquad (13)$$

Le filtrage basse fréquence « LP filtering » est par exemple défini comme une moyenne glissante par un kernel de taille 31 x31.

L'application de la correction LP1 aux points dont les valeurs dans le masque sont nulles est obtenue par :

$$LP = LP1 \cdot (1-MASK) \qquad (14)$$

L'utilisation des formules (12) et (14) permet de prendre en compte les valeurs des points du masque MASK éventuellement comprises entre 0 et 1. On applique ainsi, à la frontière de la zone où Mij = 1, graduellement la correction B(T2). De même, la correction LP1 est appliquée graduellement sur cette frontière. L'application graduelle est effective sur les pixels où les valeurs des points du masque MASK sont comprises entre 0 et 1.

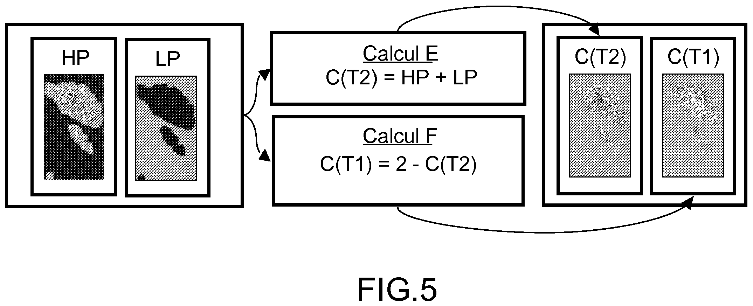

La figure 5 illustre l'image de correction de dérive de gain en température globale pour l'ensemble de l'image acquise corrigée d'offset. Cette correction globale est obtenue au calcul E en additionnant les corrections HP et LP :

$$C(T2) = HP = LP \qquad (15)$$

Dans l'exemple considéré, C(T1) et C(T2) sont réparties linéairement autour de la moyenne AVG. On peut donc ne déterminer qu'une seule correction, C(T2) en l'occurrence, et déterminer l'autre correction C(T1) par le calcul F :

$$C(T1) = 2 - C(T2) \qquad (16)$$

Cette méthode peut être exprimée comme une détermination de dérivée selon la température de l'image de correction de gain.

Il est bien entendu possible de ne pas réaliser la détermination de l'image de correction de dérive de gain en température en dérivée mais à partir de deux images distinctes C(T1) et C(T2).

**Revendications**

1. Procédé de traitement d'images issues d'un détecteur photosensible, le procédé consistant à traiter une image acquise (INPUT(T)) par le détecteur, l'image (INPUT(T)) étant corrigée par une image de gain (Gain(T)), caractérisé en qu'on applique à l'image acquise (INPUT(T)) une image de correction de dérive de gain en température (C(T1), C(T2)) en fonction d'une température (T) mesurée par le détecteur lors de l'acquisition de l'image (INPUT(T)) et en ce qu'on détermine une partie (MASK) de l'image dans laquelle les variations de gain en fonction de la température entre points voisins dépasse un seuil donné et en ce qu'on applique à l'image acquise (INPUT(T)) une image de correction de dérive de gain en température (HP) pour la partie (MASK) déterminée.

2. Procédé selon la revendication 1, **caractérisé en ce que** l'image de correction de dérive de gain en température (C(T1), C(T2)) est appliquée à l'image acquise (INPUT(T)) avant la correction par l'image de gain (Gain(T)).

3. Procédé selon l'une des revendications précédentes, **caractérisé en ce qu'**avant d'appliquer à l'image acquise (INPUT(T)) une image de dérive de gain en température, on corrige l'image acquise en fonction d'une image d'offset.

4. Procédé selon l'une des revendications précédentes, **caractérisé en ce que** l'image de dérive de gain en température est définie en fonction d'au moins deux images de dérive de gain (C(T1), C(T2)), chacune à une température donnée (T1, T2) définie auparavant.

5. Procédé selon l'une des revendications précédentes, **caractérisé en ce qu'**on applique à l'image acquise (INPUT(T)) une image de gain (Gain(T0 ; Gain(T3)) réalisée à une température donnée (T0 ; T3) et **en ce que** l'image de correction de dérive de gain (C(T1), C(T2)) permet de corrige la dérive entre la température (T) mesurée et la température donnée (T0 ; T3).

6. Procédé selon l'une des revendications précédentes, **caractérisé en ce que** pour des points de l'image n'appartenant pas à la partie (MASK), on applique à l'image acquise (INPUT(T)) une image de correction de dérive de gain en température (BP) filtrée en basse fréquence.

7. Procédé selon l'une des revendications précédentes, **caractérisé en ce qu'**on applique graduellement l'image de correction de dérive de gain en température sur une frontière de la partie (MASK).

8. Procédé selon l'une des revendications précédentes, **caractérisé en ce que** le détecteur est organisé en matrice, **en ce que** l'image de gain (Gain(T)) et l'image de correction de dérive de gain en température (C(T1), C(T2)) sont organisées en matrice de même taille que la matrice du détecteur et **en ce que** l'image de gain (Gain(T)) et l'image de correction de dérive de gain en température (C(T1), C(T2)) comprennent toutes deux des coefficients multiplicateurs appliqués à chaque point de l'Image acquise (INPUT(T)).

9. Détecteur photosensible destiné à être installé dans un système comprenant un générateur de rayonnement auquel le détecteur est sensible, le détecteur mettant en oeuvre un procédé selon l'une des revendications précédentes, l'image de gain (Gain(T)) étant propre au système, **caractérisé en ce que** le détecteur comporte des moyens pour appliquer à l'image acquise (INPUT(T)) une image de correction de dérive de gain en température (C(T1), C(T2)) en fonction d'une température (T) mesurée par le détecteur lors de l'acquisition de l'image (INPUT(T)).

**Patentansprüche**

1. Verfahren zum Verarbeiten von von einem lichtempfindlichen Detektor ausgegebenen Bildern, wobei das Verfahren darin besteht, ein von dem Detektor erfasstes Bild (INPUT(T)) zu verarbeiten, wobei das Bild (INPUT(T)) durch ein Gain-Bild (Gain(T)) korrigiert wird, **dadurch gekennzeichnet, dass** auf das erfasste Bild (INPUT(T)) ein Temperatur-Gain-Ableitungskorrekturbild (C(T1), C(T2)) in Abhängigkeit von einer von dem Detektor beim Erfassen des Bildes (INPUT(T)) gemessenen Temperatur (T) angewandt wird, und dadurch, dass ein Teil des Bildes (MASK) bestimmt wird, in dem die Gain-Variationen in Abhängigkeit von der Temperatur zwischen benachbarten Punkten eine gegebene Schwelle übersteigen, und dadurch, dass auf das erfasste Bild (INPUT(T)) ein Temperatur-Gain-Ableitungskorrekturbild (HP) für den bestimmten Teil (MASK) angewandt wird.

2. Verfahren nach Anspruch 1, **dadurch gekennzeichnet, dass** das Temperatur-Gain-Ableitungskorrekturbild (C(T1), C(T2)) vor der Korrektur durch das Gain-Bild (Gain (T)) auf das erfasste Bild (INPUT(T)) angewandt wird.

3. Verfahren nach einem der vorherigen Ansprüche, **dadurch gekennzeichnet, dass** vor dem Anwenden eines Temperatur-Gain-Ableitungsbildes auf das erfasste Bild (INPUT(T)) das erfasste Bild in Abhängigkeit von einem Offset-Bild korrigiert wird.

4. Verfahren nach einem der vorherigen Ansprüche, **dadurch gekennzeichnet, dass** das Temperatur-Gain-Ableitungsbild in Abhängigkeit von wenigstens zwei Gain-Ableitungsbildern (C(T1), C(T2)) jeweils bei einer zuvor definierten gegebenen Temperatur (T1, T2) definiert wird.

5. Verfahren nach einem der vorherigen Ansprüche, **dadurch gekennzeichnet, dass** auf das erfasste Bild (INPUT(T)) ein Gain-Bild (Gain(T0); Gain(T3)), realisiert bei einer gegebenen Temperatur (T0; T3), angewandt wird, und dadurch, dass das Gain-Ableitungskorrekturbild (C(T1), C(T2)) das Korrigieren der Ableitung zwischen der gemessenen Temperatur (T) und der gegebenen Temperatur (T0; T3) zulässt.

6. Verfahren nach einem der vorherigen Ansprüche, **dadurch gekennzeichnet, dass** für Punkte des Bildes, die nicht zu dem Teil (MASK) gehören, auf das erfasste Bild (INPUT(T)) ein tiefpassgefiltertes Temperatur-Gain-Ableitungskorrekturbild (BP) angewandt wird.

7. Verfahren nach einem der vorherigen Ansprüche, **dadurch gekennzeichnet, dass** das Temperatur-Gain-Ableitungskorrekturbild allmählich an einer Grenze des Teils (MASK) angewandt wird.

8. Verfahren nach einem der vorherigen Ansprüche, **dadurch gekennzeichnet, dass** der Detektor zu einer Matrix organisiert ist, dadurch, dass das Gain-Bild (Gain(T)) und das Temperatur-Gain-Ableitungskorrekturbild (C(T1), C(T2)) zu einer Matrix derselben Größe organisiert sind wie die Matrix des Detektors, und dadurch, dass das Gain-Bild (Gain(T)) und das Temperatur-Gain-Ableitungskorrekturbild (C(T1), C(T2)) beide Multiplikatorkoeffizienten umfassen, die auf jeden Punkt des erfassten Bildes (INPUT(T)) angewandt werden.

9. Fotoempfindlicher Detektor zur Installation in einem System, das einen Strahlungsgenerator umfasst, für den der Detektor empfindlich ist, wobei der Detektor ein Verfahren nach einem der vorherigen Ansprüche ausführt, wobei das Gain-Bild (Gain(T)) für das System spezifisch ist, **dadurch gekennzeichnet, dass** der Detektor Mittel zum Anwenden eines Temperatur-Gain-Ableitungskorrekturbildes (C(T1), C(T2)) in Abhängigkeit von einer von dem Detektor beim Erfassen des Bildes (INPUT(T)) gemessenen Temperatur (T) auf das erfasste Bild (INPUT(T)) umfasst.

**Claims**

1. Method for processing images from a photosensitive detector, the method involving processing an image (INPUT(T)) acquired by the detector, the image (INPUT(T)) being corrected by a gain image (Gain(T)), **characterised in that** there is applied to the acquired image (INPUT(T)) a temperature gain drift correction image (C(T1), C(T2)) in accordance with a temperature (T) measured by the detector during the acquisition of the image (INPUT(T)) and **in that** there is determined a portion (MASK) of the image in which the gain variations in accordance with the temperature between adjacent points exceeds a specific threshold and **in that** there is applied to the acquired image (INPUT(T)) a temperature gain drift correction image (HP) for the portion (MASK) determined.

2. Method according to claim 1, **characterised in that** the temperature gain drift correction image (C(T1), C(T2)) is applied to the acquired image (INPUT(T)) before the correction by the gain image (Gain (T)).

3. Method according to either of the preceding claims, **characterised in that** before a temperature gain drift image is applied to the acquired image (INPUT(T)), the acquired image is corrected in accordance with an offset image.

4. Method according to any one of the preceding claims, **characterised in that** the temperature gain drift image is defined in accordance with at least two gain drift images (C(T1), C(T2)), each at a specific temperature (T1, T2) defined beforehand.

5. Method according to any one of the preceding claims, **characterised in that** there is applied to the acquired image (INPUT(T)) a gain image (Gain(TO); Gain(T3)) carried out at a specific temperature (T0; T3) and **in that** the gain drift correction image (C(T1), C(T2)) enables the drift between the temperature (T) measured and the specific temperature (T0; T3) to be corrected.

6. Method according to any one of the preceding claims, **characterised in that** for points of the image which do not belong to the portion (MASK) there is applied to the acquired image (INPUT(T)) a temperature gain drift correction image (BP) which is filtered at low frequency.

7. Method according to any one of the preceding claims, **characterised in that** the temperature gain drift correction image is applied gradually to a border of the portion (MASK).

8. Method according to any one of the preceding claims, **characterised in that** the detector is organised in a matrix, **in that** the gain image (Gain(T)) and the temperature gain drift correction image (C(T1), C(T2)) are organised in a matrix of the same size as the matrix of the detector and **in that** the gain image (Gain(T)) and the temperature gain drift correction image (C(T1), C(T2)) both comprise multiplier coefficients applied to each point of the acquired image (INPUT(T)).

9. Photosensitive detector which is intended to be installed in a system comprising a radiation generator to which the detector is sensitive, the detector implementing a method according to any one of the preceding claims, the gain image (Gain(T)) being specific to the system, **characterised in that** the detector comprises means for applying to the acquired image (INPUT(T)) a temperature gain drift correction image (C(T1), C(T2)) in accordance with a temperature (T) measured by the detector during the acquisition of the image (INPUT(T)).

CORRECTION SYSTEME — 20

INPUT (T = 29°C) — 10

Division — 11

OUTPUT — 12

CALIBRATION SYSTEME — 21

GAIN (T0 = 23°C) — 15

Premier calcul — 14

GAIN (T = 29°C) — 13

CALIBRATION DETECTEUR — 22

C (T₁) — 16
$T_1 = 21°C$

C (T₂) — 17
$T_2 = 33°C$

T1, T2

FIG.1

FIG.2

EP 2 235 933 B1

**FIG.3**

**FIG.4**

EP 2 235 933 B1

| HP | LP | | Calcul E<br>$C(T2) = HP + LP$ | | $C(T2)$ | $C(T1)$ |

Calcul E
$C(T2) = HP + LP$

Calcul F
$C(T1) = 2 - C(T2)$

FIG.5

**EP 2 235 933 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050029453 A1